# EUROPÄISCHE PATENTANMELDUNG

(11) **EP 1 640 895 A1**
(43) Veröffentlichungstag der Anmeldung: **29.03.2006**
(21) Anmeldenummer: 04022977.5
(22) Anmeldetag: 27.09.2004
(51) Int. Cl.: G06Q 10/00

(54) **Verfahren und Computerprogramm zur Verarbeitung elektronischer Rechnungen**

(71) Anmelder: SIEMENS AKTIENGESELLSCHAFT, 80333 München (DE)
(72) Erfinder: Schneider, Thomas, 85649 Faistenhaar (DE)

(57) **Zusammenfassung**

Die Erfindung betrifft ein Verfahren zur Verarbeitung elektronischer Rechnungen, bei dem ein Prüfelement einer von einem Rechnungssteller an einen Rechnungsempfänger übermittelten elektronischen Rechnung mit einer elektronischen Signatur des Rechnungsstellers versehen ist und in einem elektronischen Archiv des Rechnungsempfängers gespeichert wird. Ein entsprechend einer erweiterbaren Beschreibungssprache formatiertes und durch Steuerungselemente gegliedertes Bearbeitungselement der elektronischen Rechnung wird durch einen Verweis auf das im elektronischen Archiv gespeicherte Prüfelement ergänzt, an ein elektronisches Buchhaltungssystem weitergeleitet und anhand der Steuerungselemente ausgewertet. Das Prüfelement wird anhand des vom Bearbeitungselement umfaßten Verweises im elektronischen Buchhaltungssystem zum Abruf verfügbar gemacht.

## Beschreibung

Bei zahlreichen Rechtsgeschäften ist Schriftform erforderlich. Zur Vereinfachung des elektronischen Geschäftsverkehrs ist in zahlreichen Ländern seit einigen Jahren auch die Verwendung von elektronischen Unterschriften in Fällen zulässig, in denen grundsätzlich das Schriftformerfordernis gilt. In der Bundesrepublik Deutschland wurde hierzu beispielsweise das Signaturgesetz erlassen. Des weiteren kommt handschriftlich oder digital signierten Dokumenten über das Schriftformerfordernis hinaus eine große Bedeutung als Beweismittel zu. Bei digitalen Signaturen kommt es dabei insbesondere darauf an, die Unverfälschtheit eines Dokuments und die Identität eines Unterzeichners eindeutig nachzuvollziehen.

Insbesondere bei elektronischen Rechungen bestehen Anforderungen nach einer sorgfältigen Archivierung beispielsweise im Hinblick auf Revisionen oder Prüfungen. Dabei sollten Urheberschaft und Integrität von Rechnungsdokumenten durch Dritte nachprüfbar sein. Besondere Anforderungen werden an technische Systeme zur Durchführung derartiger Überprüfungen gestellt, die gerade aus Sicht Dritter vertrauenswürdige Ergebnisse liefern sollten. Ein Anwendungsbeispiel ist eine Vorlage von Umsatzsteuer-Sammelabrechnungen bei einem Finanzamt.

Auch mit Einführung des Signaturgesetzes oder vergleichbarer rechtlicher Bestimmungen ist ein Käufer nicht von einer Archivierungspflicht im Hinblick auf Originaldokumente befreit, da auch mit einer qualifizierten digitalen Signatur versehene Dokumente vergleichbar zugänglich und überprüfbar wie Papierdokumente sein sollten. Bisher bekannte elektronische Buchhaltungssysteme leisten allerdings nur eingeschränkt Unterstützung für eine Verwaltung und Überprüfung mit einer digitalen Signatur versehener Dokumente.

Der vorliegenden Erfindung liegt daher die Aufgabe zugrunde, ein Verfahren zur Verarbeitung elektronischer Rechnungen zu schaffen, das eine einfache Verarbeitung elektronischer Rechnungen durch ein elektronisches Buchhaltungssystem ermöglicht und eine Rechnungsprüfung für Dritte vereinfacht, sowie eine zur Durchführung des Verfahrens geeignete Implementierung anzugeben.

Erfindungsgemäß wird diese Aufgabe durch ein Verfahren mit den in Anspruch 1 angegebenen Merkmalen und durch ein Computerprogramm mit den in Anspruch 6 angegebenen Merkmalen gelöst. Vorteilhafte Weiterbildungen der Erfindung sind in den abhängigen Ansprüchen angegeben.

Ein wesentlicher Aspekt der vorliegenden Erfindung liegt darin, daß eine elektronische Rechnung zur einfachen Verarbeitung durch ein elektronisches Buchhaltungssystem ein Bearbeitungselement und zur vereinfachten Rechnungsprüfung durch Dritte ein Prüfelement aufweist. Das Prüfelement einer von einem Rechnungssteller an einen Rechnungsempfänger übermittelten elektronischen Rechnung ist mit einer elektronischen Signatur des Rechnungsstellers versehen und wird in einem elektronischen Archiv des Rechnungsempfängers gespeichert. Das Bearbeitungselement ist entsprechend einer erweiterbaren Beschreibungssprache formatiert und durch Steuerungselemente gegliedert und wird durch einen Verweis auf das im elektronischen Archiv gespeicherte Prüfelement ergänzt, an ein elektronisches Buchhaltungssystem weitergeleitet und anhand der Steuerungselemente ausgewertet. Das Prüfelement wird anhand des vom Bearbeitungselement umfaßten Verweises im elektronischen Buchhaltungssystem zum Abruf verfügbar gemacht. Hierdurch ergibt sich eine komfortable Vergleichbarkeit von durch das elektronische Buchhaltungssystem verarbeiteten bzw. verarbeitbaren Rechnungsinformationen entsprechend dem Bearbeitungselement mit durch Dritte nachprüfbaren Rechnungsinformationen entsprechend dem Prüfelement.

Entsprechend einer vorteilhaften Weiterbildung der vorliegenden Erfindung wird ein dem Rechnungssteller zugeordneter öffentlicher Schlüssel zur Prüfung der elektronischen Signatur des Prüfelements im elektronischen Buchhaltungssystem zum Abruf verfügbar gemacht wird. Dies ermöglicht eine besonders schnelle und komfortable Überprüfung der Signatur des Prüfelements.

Außerdem kann das Prüfelement entsprechend einem portablen elektronischen Dokumentenformat formatiert sein. Unter einem portablen elektronischen Dokumentenformat ist ein durch gängige Anwendungssoftware unterstütztes Format zu verstehen, das vorzugsweise plattformübergreifend weit verbreitet ist. Hierzu zählt beispielsweise das PDF-, ASCII-Text-, Rich-Text-oder Word-Format. Durch eine Formatierung des Prüfelements entsprechend einem portablen elektronischen Dokumentenformat ergibt sich eine besonders gute Interoperabilität.

Auch das Bearbeitungselement kann mit einer elektronischen Signatur des Rechnungsstellers versehen sein. Dies bietet einen zusätzlichen Gewinn an Sicherheit, indem beispielsweise vor der Auswertung des Bearbeitungselements im elektronischen Buchhaltungssystem eine Validierung vom Bearbeitungselement umfaßter Rechnungsinformationen ausführbar ist.

Das Prüfelement und/oder das Bearbeitungselement sind bzw. ist vorzugsweise XML-Dokumente bzw. ein XML-Dokument. Für derartige Dokumentenformate existieren bereits standardisierte Verfahren zur Erzeugung elektronischer Signaturen. Dies trägt zu einer Vereinfachung eine Implementierung der vorliegenden Erfindung bei.

Die vorliegende Erfindung wird nachfolgend an Ausführungsbeispielen anhand der Zeichnung näher erläutert. Es zeigt
- Figur 1: eine schematische Darstellung einer ersten Realisierungsvariante der vorliegenden Erfindung,
- Figur 2: eine schematische Darstellung einer zweiten Variante und
- Figur 3: eine schematische Darstellung einer dritten Variante.

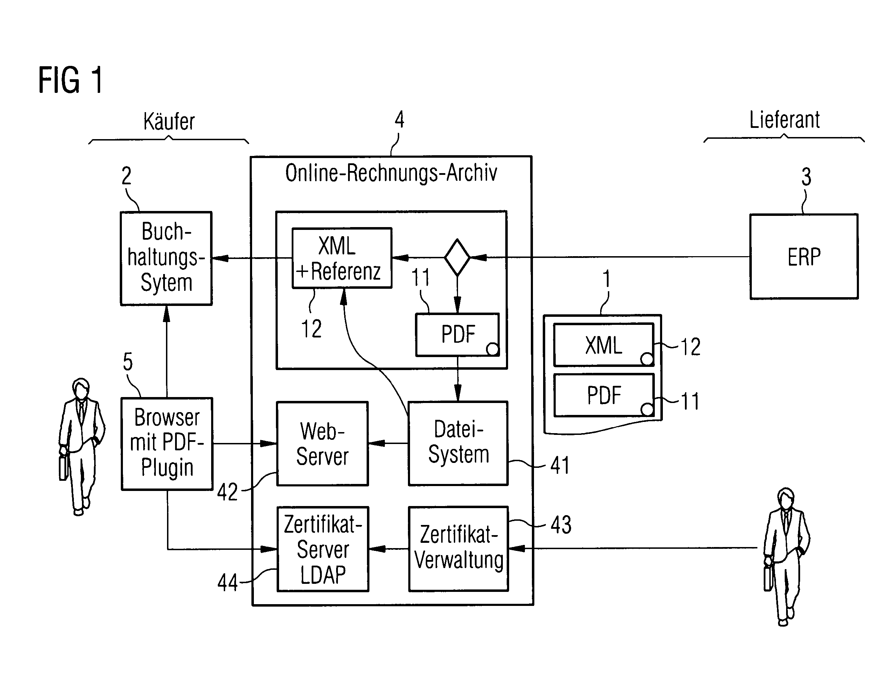

Die in Figur 1 abgebildete schematische Darstellung zeigt eine Übermittlung einer elektronischen Rechnung 1 von einem Lieferanten an einen Kunden. Die elektronische Rechnung 1 wird beispielsweise durch ein Enterprise-Resource-Planning-System 3 des Lieferanten erstellt und weist ein Prüfelement 11 und ein Bearbeitungselement 12 auf. Das Prüfelement 11 ist im vorliegenden Beispiel ein vom Lieferanten digital signiertes PDF-Dokument mit Rechnungsinformationen. Eine Überprüfung der digitalen Signatur eines solchen Dokuments ist auf einfache Weise mittels gängiger Anwendungssoftware möglich, beispielsweise mittels eines Web-Browsers. Das Bearbeitungselement 12 ist im vorliegenden Beispiel ein XML-Dokument mit Rechnungsinformationen, die durch Steuerungselemente gegliedert sind. Bei XML-Dokumenten werden solche Steuerungsinformationen auch als Tags bezeichnet und ordnen im vorliegenden Fall den durch sie umfaßten Rechnungsinformationen einen bestimmten Kontext zu, beispielsweise Käufer, Lieferant, Menge oder Preis.

Das Prüfelement 11 wird innerhalb eines Archivsystems 4 des Käufers in einem Dateisystem 41 gespeichert und ist über einen als URL (Uniform Resource Locator) bezeichneten Verweis abrufbar. Dieser Verweis wird als Referenz in das Bearbeitungselement 12 eingefügt. Nach Möglichkeit sollte dabei eine Verarbeitbarkeit der vom Bearbeitungselement 12 umfaßten Rechnungsinformationen nicht behindern. Dies kann beispielsweise durch Einfügen des Verweises in ein Kommentar oder Notizfeld des Bearbeitungselements 12 erfolgen. Anschließend wird das Bearbeitungselement 12 an ein elektronisches Buchhaltungssystem 2 des Kunden weitergeleitet und dort anhand der Steuerungselemente verarbeitet.

Ein Sachbearbeiter kann über den in das Bearbeitungselement 12 eingefügten Verweis, einen Web-Browser 5 mit PDF-Plugin und einen Web-Server 42 ein vom Prüfelement 11 umfaßtes Rechnungsorginal zu Kontrollzwecken aus dem Dateisystem 41 abrufen. Ein unauthorisierter Zugriff auf das im Dateisystem 41 gespeicherte Prüfelement 11 kann beispielsweise durch Wahl eines schwer erratbaren URL erschwert werden. Als Teilkomponente des URL wird vorzugsweise eine Zufallszahl mit hoher Hemming-Distanz erzeugt, beispielsweise wie bei Session-Keys in Web-Programmanwendungen.

Klickt beispielsweise ein Sachbearbeiter im Buchhaltungssystem 4 den durch den URL bezeichneten Verweis auf das Prüfelement 11 an, so wird das PDF-Plugin im Web-Browser 5 gestartet, worauf eine Darstellung des vom Prüfelement 11 umfaßten Rechnungsoriginals erfolgt. In einem weiteren Schritt wird über einen LDAP-Zertifikat-Server 44 (Lightweight Directory Access Protocol) auf ein in einem Zertifikatsverwaltungssystem 43 gespeichertes Zertifikat des Lieferanten zugegriffen und mit diesem die digitale Signatur des Prüfelements 11 verifiziert. Je nach Anwendungsfall kann das Archivsystem 4 so konfiguriert werden, das ein authorisierter Dritter beispielsweise über eine gesicherte Internetverbindung eine Rechnungsprüfung vornehmen kann.

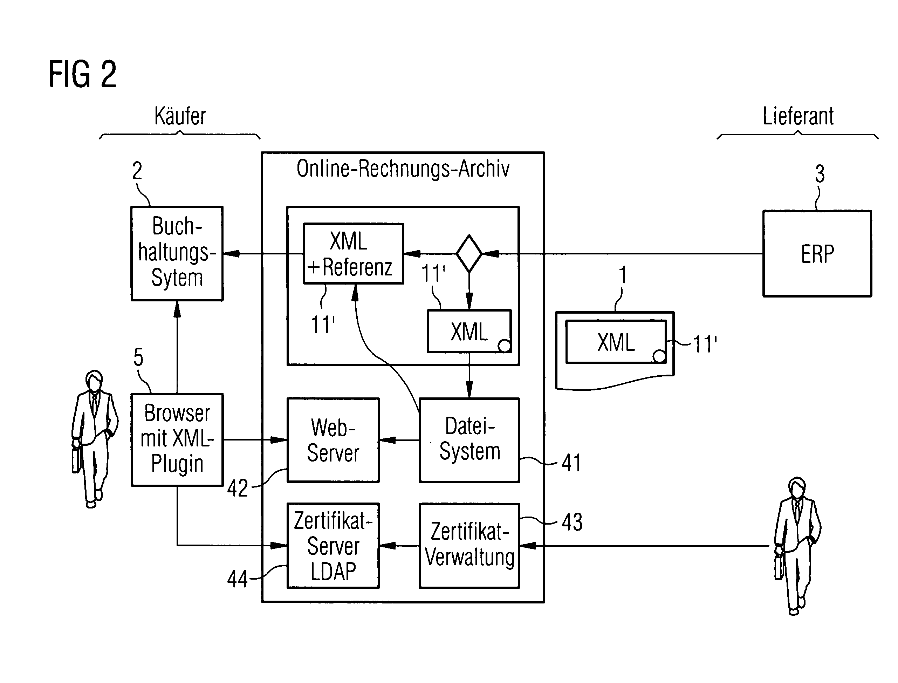

Bei der in Figur 2 schematisch dargestellten zweite Variante weist die elektronische Rechnung 1 ein kombiniertes Prüf- und Bearbeitungselement 11' auf, das durch ein digital signiertes XML-Dokument realisiert ist. Die Verfahrensschritte zur Verarbeitung der elektronischen Rechnung 1 entsprechen im wesentlichen denen bei der ersten Variante. Die zweite Variante erfordert im Vergleich zur ersten Variante eine exakte Definition der innerhalb des XML-Dokuments verwendeten Tags. Insbesondere ist der Web-Browser 5 mit einem speziellen an die definierten Tags angepaßten XML-Plugin zu versehen, damit eine korrekte Signaturprüfung möglich ist.

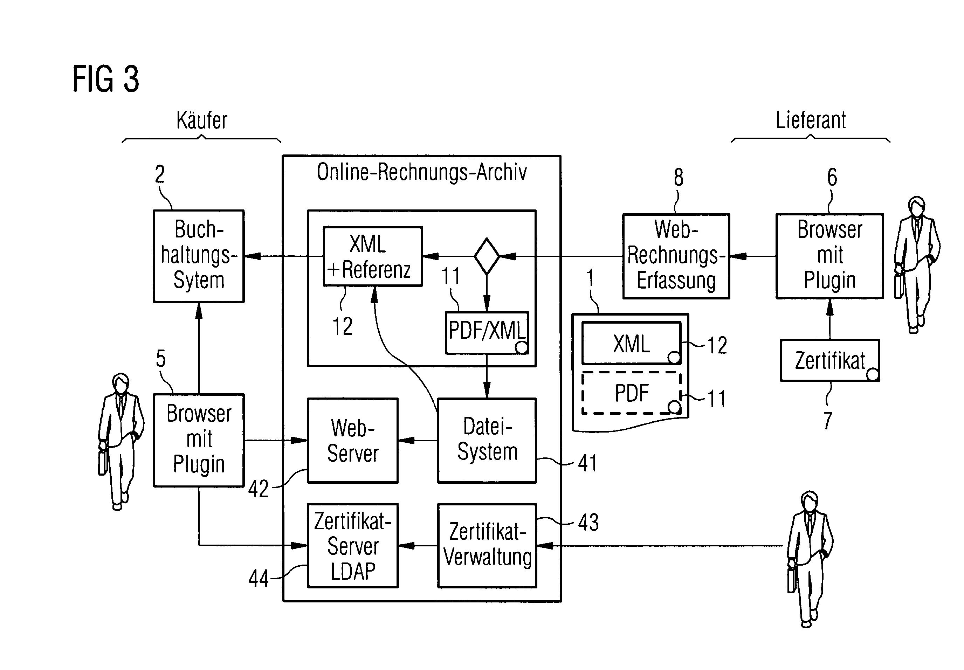

Die in Figur 3 dargestellte dritte Variante kann aus einer Weiterentwicklung sowohl der ersten Variante als auch der zweiten Variante abgeleitet werden. Entsprechend der dritten Variante wird ein Rechnungsoriginal im PDF-Format auf Lieferantenseite einem Sachbearbeiter an einem Web-Browser 41 mit PDF-Plugin angezeigt und dieses vom Sachbearbeiter mittels eines Zertifikats 6 des Lieferanten digital signiert. Anschließend wird die elektronische Rechnung 1 über eine Web-Rechnungserfassungsschnittstelle 8 auf Käuferseite an das elektronische Buchhaltungssystem 2 und das Archivsystem 4 übermittelt. Die dritte Variante erfordert nur eine geringe Integration des Lieferanten in eine Buchhaltungssystem 2 und Archivsystem 4 umfassende Infrastruktur des Käufers.

Die hier beschriebenen Verfahren zur Verarbeitung elektronischer Rechnungen werden vorzugsweise mittels eines Computerprogramms implementiert, das zumindest einen Codeabschnitt aufweist und in einen Arbeitsspeicher eines Computers ladbar ist. Wenn das Computerprogramm im Computer abläuft werden die vorangehend beschriebenen Verfahrensschritte ausgeführt bzw. veranlaßt.

Die Anwendung der vorliegenden Erfindung ist nicht auf die hier beschriebenen Ausführungsbeispiele beschränkt. Insbesondere ist eine Übertragung auch auf andere Arten von archivierungspflichtigen Geschäftsdokumenten möglich, beispielsweise Dokumente zur Exportkontrolle, Beschaffung und Lagerhaltung, Verkauf, Außenwirtschaft oder Zollwirtschaft. In diesem Sinne steht Rechnungsempfänge bzw. Käufer stellvertretend für einen Empfänger eines archivierungspflichtigen Dokuments, während Rechnungssteller bzw. Lieferant für einen Ersteller eines solchen Dokuments steht. Buchhaltungssystem kann verallgemeinert werden zu einem EDV-System zur empfängerseitigen Verarbeitung eines archivierungspflichtigen Dokuments.

## Patentansprüche

1. Verfahren zur Verarbeitung elektronischer Rechnungen, bei dem
- ein Prüfelement einer von einem Rechnungssteller an einen Rechnungsempfänger übermittelten elektronischen Rechnung mit einer elektronischen Signatur des Rechnungsstellers versehen ist und in einem elektronischen Archiv des Rechnungsempfängers gespeichert wird,
- ein entsprechend einer erweiterbaren Beschreibungssprache formatiertes und durch Steuerungselemente gegliedertes Bearbeitungselement der elektronischen Rechnung durch einen Verweis auf das im elektronischen Archiv gespeicherte Prüfelement ergänzt, an ein elektronisches Buchhaltungssystem weitergeleitet und anhand der Steuerungselemente ausgewertet wird,
- das Prüfelement anhand des vom Bearbeitungselement umfaßten Verweises im elektronischen Buchhaltungssystem zum Abruf verfügbar gemacht wird.

2. Verfahren nach Anspruch 1, bei dem
ein dem Rechnungssteller zugeordneter öffentlicher Schlüssel zur Prüfung der elektronischen Signatur des Prüfelements im elektronischen Buchhaltungssystem zum Abruf verfügbar gemacht wird.

3. Verfahren nach einem der Ansprüche 1 oder 2, bei dem
das Prüfelement entsprechend einem portablen elektronischen Dokumentenformat formatiert ist.

4. Verfahren nach einem der Ansprüche 1 bis 3, bei dem
das Bearbeitungselement mit einer elektronischen Signatur des Rechnungsstellers versehen ist.

5. Verfahren nach einem der Ansprüche 1 bis 4, bei dem
das Prüfelement und/oder das Bearbeitungselement XML-Dokumente/ein XML-Dokument sind/ist.

6. Computerprogramm, das in einen Arbeitsspeicher eines Recheneinrichtung ladbar ist und zumindest einen Codeabschnitt aufweist, bei dessen Ausführung
- ein Prüfelement einer von einem Rechnungssteller an einen Rechnungsempfänger übermittelten elektronischen Rechnung mit einer elektronischen Signatur des Rechnungsstellers versehen ist und in einem elektronischen Archiv des Rechnungsempfängers gespeichert wird,
- ein entsprechend einer erweiterbaren Beschreibungssprache formatiertes und durch Steuerungselemente gegliedertes Bearbeitungselement der elektronischen Rechnung durch einen Verweis auf das im elektronischen Archiv gespeicherte Prüfelement ergänzt, an ein elektronisches Buchhaltungssystem weitergeleitet und anhand der Steuerungselemente ausgewertet wird,
- das Prüfelement anhand des vom Bearbeitungselement umfaßten Verweises im elektronischen Buchhaltungssystem zum Abruf verfügbar gemacht wird,
wenn das Computerprogramm in der Recheneinrichtung abläuft.
